# EUROPEAN PATENT SPECIFICATION

(11) **EP 3 572 730 B1**
(45) Date of publication and mention of the grant of the patent: **04.01.2023**
(21) Application number: 19172355.0
(22) Date of filing: 02.05.2019
(51) Int. Cl.: G01J 5/02, G01J 5/04, G01J 5/80, G01J 5/00, F24C 7/08, H05B 6/06

(54) **REMOTE TEMPERATURE MEASUREMENT OF COOKWARE THROUGH A CERAMIC GLASS PLATE USING AN INFRARED SENSOR**
FERNTEMPERATURMESSUNG VON KOCHGESCHIRR DURCH EINE KERAMISCHE GLASPLATTE MIT EINEM INFRAROTSENSOR
MESURE DE TEMPÉRATURE DE BATTERIE DE CUISINE À DISTANCE À TRAVERS UNE PLAQUE DE VERRE EN CÉRAMIQUE UTILISANT UN CAPTEUR INFRAROUGE

(30) Priority: 02.05.2018 US 201862665589 P
(43) Date of publication of application: 27.11.2019
(73) Proprietor: ELATRONIC AG, 9032 Engelburg (CH)
(72) Inventor: WEDER, Heinrich, 9032 Engelburg (CH); KELLER, Reto, 9032 Engelburg (CH); MEIER, Werner, 9032 Engelburg (CH)
(74) Representative: Mötteli-Mantelli, Novella

(56) References cited:
- WO-A1-2011/055279
- DE-A1-102013 108 648
- JP-A- 2004 327 053
- JP-A- 2013 004 328
- US-A1- 2011 284 524

## Description

### Cross Reference to Related Applications

This application claims the benefit of U.S. Provisional Application No. 62/665,589, filed May 2,2018, entitled: REMOTE TEMPERATURE MEASUREMENT OF COOKWARE THROUGH A CERAMIC GLASS PLATE USING AN INFRARED SENSOR.

### Field of the Invention

The invention relates to a combination of an infrared measurement system and an induction cooker as well as a method for determining the temperature of a cookware having a lower surface on an induction cooker using such a combination.

### Background of the invention

The measurement of the thermal radiation of objects in the infrared range to determine their temperature has been known for a long time and is widely used. A method for the indirect measurement and control of cookware with the help of temperature sensors for heating coil protection has also been employed for many years. This method has, however, the disadvantage that the inertia of the temperature sensors provides delayed information on the temperature of the cookware, because heat must first be conducted across the ceramic glass plate which evidently takes time. Moreover, such a method is subject to errors in the absence of a planar bottom of the cookware.

The use of an infrared sensor with a spectral response suitable for the measurement of cookware temperature through a ceramic glass plate has been described for example in the publication titled Infrared Sensor-Based Temperature Control for Domestic Induction Cooktops, Javier Lasobras et al., ISSN 1424-8220.

In this publication, any possible dependence of the emissivity of a pan on its position on the stove has been neglected. Such a dependence may arise for example as a result of inhomogeneous optical properties of the bottom of the pan. Moreover, the influence of the temperature of the ceramic glass plate itself has not been taken into account, although this temperature may greatly vary, depending on whether or not the stove has been in use with another pan before.

Measurement of temperature of cookware may be performed via a separate, handheld infrared sensor with the infrared beam pointed directly at the cookware. However, this is not convenient because the device must be stored next to the induction plate, taken by hand, aimed and read, and then replaced in its usual stored position.

Use of an infrared sensor for measuring temperature of cookware would be advantageous, but measurement through a ceramic glass plate supporting the cookware has not been satisfactorily realized using an infrared sensor. However, such use, if a consistent and reliable and accurate result may be obtained, would clearly be desirable.

What is needed therefore is a device using an infrared sensor permanently affixed and readily activated for reading temperature, and which can accurately read temperature through the ceramic glass plate.

DE 10 2013 108 648 A1 discloses a cooking device with at least one measuring system comprising a hob with a heatable cooking area heated by an induction device and a sensor device for detecting temperatures of the cooking area.

### Summary of the Invention

The invention provides for remote measurement of temperature of cookware through a ceramic glass plate by means of an infrared sensor, taking into account the emissivity of the cookware which is continuously evaluated, and taking into account the temperature of the ceramic glass plate. The combination includes an infrared sensor disposed below an induction coil and a ceramic glass plate supporting the cookware, the combination using registered inputs of the emissivity of the cookware and of the temperature of the ceramic glass plate in order to accurately evaluate the temperature of the cookware.

It is an object of this invention to provide accurate temperature control of cookware during cooking with a glass ceramic stove.

It is an object of the invention to permit faster control of the temperature of cookware on a glass ceramic hob during heating and cooking.

It is another object of the invention to permit fast control of the temperature of cookware even when cooking with high power.

It is yet another object of the invention to reliably protect the cookware against overheating.

### Brief Description of the Drawings

**FIG. 1A** is a cross-sectional view of a glass ceramic hob containing the elements of an infrared measurement system,
   including the printed circuit board containing sensors and control electronics.
**FIG. 1B** is a top view of the printed circuit board containing sensors and control electronics.
**FIG. 2** is a schematic view of a rotary knob for switching the method of temperature control between power and temperature regulation.
**FIG. 3** is a block diagram of the control electronics.
**FIG. 4** is a multi-hob cooking kitchen island.
**FIG. 5** is a schematic diagram of a retrofit kit.
**FIG. 6** is a schematic diagram of an alternate retrofit kit.

Those skilled in the art will appreciate that elements in the figures are illustrated for simplicity and clarity and have not necessarily been drawn to scale. For example, dimensions may be exaggerated relative to other elements to help improve understanding of the invention and its embodiments. Furthermore, when the terms `first`, 'second', and the like are used herein, their use is intended for distinguishing between similar elements and not necessarily for describing a sequential or chronological order. Moreover, relative terms like `front`, `back`, `top` and 'bottom', and the like in the description and/or in the claims are not necessarily used for describing exclusive relative position. Those skilled in the art will therefore understand that such terms may be interchangeable with other terms, and that the embodiments described herein are capable of operating in other orientations than those explicitly illustrated or otherwise described.

### Detailed Description of the Preferred Embodiments

The following description is not intended to limit the scope of the invention in any way as they are exemplary in nature, serving to describe the best mode of the invention known to the inventors as of the filing date hereof. Consequently, changes may be made in the arrangement and/or function of any of the elements described in the exemplary embodiments disclosed herein without departing from the scope of the invention as set out in the appended claims.

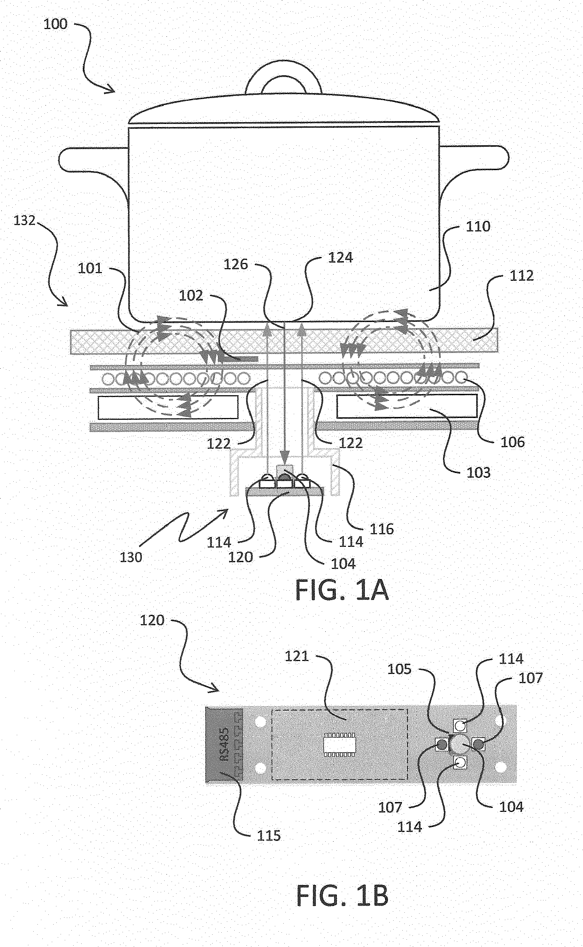

Referring now to **FIGs. 1A** and **1B****,** a glass ceramic hob 112 contains the elements of an infrared measurement system 130. These elements include at least a printed circuit board 120 containing sensors 104, 308 and control electronics 121.

Cookware 110, or more precisely the metallic material from which cookware is made, is heated by alternating magnetic fields 101 in an induction stove 132 of the system 100. Magnetic fields 101 are generated by induction coils 106 located underneath the hob 112. These magnetic fields 101 cause eddy currents to flow in the cookware, which as a result gets heated by Joule heating. The induction coils 106 are excited by resonant circuits driven by power electronics 134.

Power and temperature control are governed by control electronics 121 which also detects the presence of cookware 110 and which, together with e.g. a RS485 interface 115, 305, is located on a printed circuit board (PCB) 120 underneath the glass ceramic hob 112. The PCB hosts a thermistor 105, 306 close to infrared sensor 104 and two visible light LEDs 107 illuminating the center of the hob along with two infrared light emitting diodes (LEDs) 114 nearby. These LEDs 114 and the infrared sensor 104 are mounted so as to be isolated from infrared light sources (not shown) other than that of the object whose temperature is to be measured, particularly sources which vary in intensity over time. The control electronics 121 also controls the safety features which limit the maximum temperature. In order to guarantee safe operation, a temperature sensor 102 is located in between each inductor coil and the glass ceramic hob.

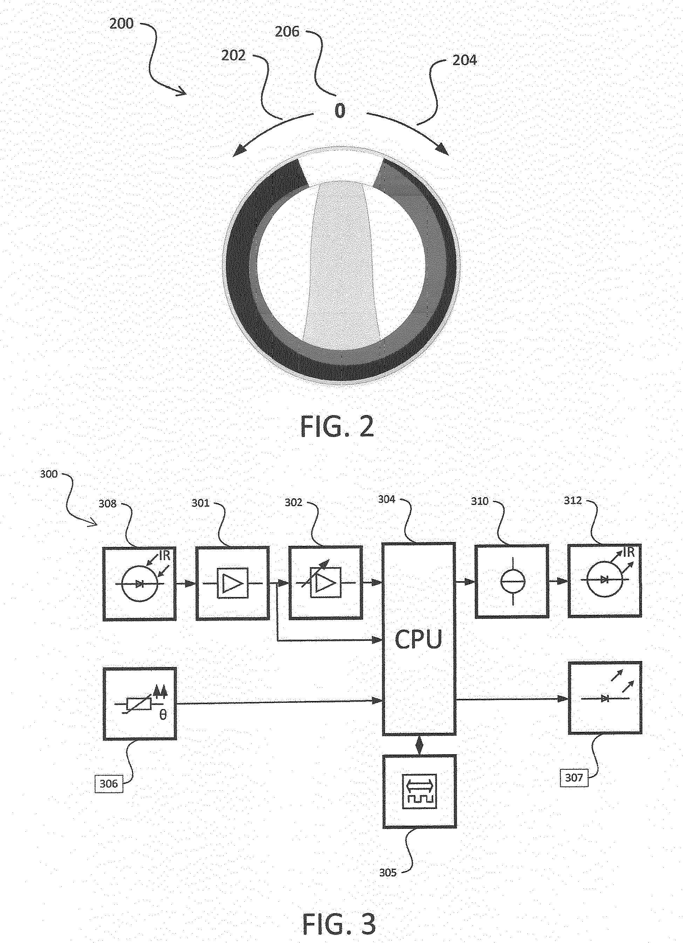

Referring now to **FIG. 2**, the control of ceramic glass hobs 112 is typically executed through a rotary knob 200 with which the power level or the temperature can be set. The off-position 206 is located for example at an angle of 0°. The power mode, chosen for example by a clockwise rotation 204 of the knob from the off-position 206, permits the power to be progressively changed. Increasing power levels can be indicated for example by numbers ranging from 1 to any number, for example 9.

A rotation of the knob 200 from the off-position in the opposite direction, for example a counter clockwise rotation 202, also activates the temperature mode. The temperature can be continuously set in this mode for example in the range from 70°C to 250°C. Whenever the rotary knob 200 is rotated across the off-position 206 rapidly, for example not remaining in the off-position for more than one second, the current mode of operation remains unaltered. This functionality allows a fast adjustment of the power level or the temperature level respectively, without altering the mode of operation. This functionality further allows that the knob 200 be turned either clockwise or counter clockwise to a different level position, without altering the mode of operation.

Referring now to **FIG. 3**, a block diagram 300, the thermal radiation of the cookware 110 which is transmitted through the ceramic glass hob 112 is measured by an infrared sensor 104, 308 located on the PCB 120 below the inductor coil 106. The sensor 104, 308 is preferably a photodiode which is preferably highly sensitive at a wavelength of 2.3 µm. The spectral transmissivity of the ceramic glass, as provided by the hob manufacturer, is taken into account in the temperature measurement. Temperatures typically in the range of 70 to 350°C are monitored by a two-stage amplifier unit with a first stage 301 and a second stage 302, both communicating with a microprocessor 304. The microprocessor records temperatures typically in the range of 70 to 350°C and transmits them to the control electronics for example through a RS485 interface 115, 305 by means of a fieldbus or RS485 protocol. In order to compensate for the temperature characteristic of the infrared sensor 104, 308, an active temperature sensor (thermistor) 105, 306, or, alternatively, a passive temperature sensor, is located in its immediate vicinity. An enclosure 116, preferably made from aluminum, protects the infrared measurement system 130 from thermal and electromagnetic interference. The enclosure 116 further isolates the infrared sensor 104, 308 from infrared light sources (not shown) other than that of the object whose temperature is to be measured, particularly sources which vary in intensity over time.

The relevant emissivity for the remote temperature measurement by infrared radiation sensing cannot be defined as a single, constant value because of the use of different cookware 110. For example, a pan with a black bottom absorbs thermal radiation considerably more efficiently than pans with glossy bottoms. The optical properties of pans therefore significantly affect the measurement results.

The emissivity of cookware 110 can be determined by infrared light emitting diodes (LEDs) 114, 312 located close to the infrared sensor 104, 308. These infrared LEDs 114, 312 are switched on for a short time by a constant current provided by the constant current source 310. Infrared light 122 emitted by the LEDs is then transmitted through the ceramic glass plate of the hob 112 and reflected at the bottom 124 of the cookware 110. The reflected intensity 126 is detected by the infrared sensor 104, 308. The more infrared light is reflected back to the sensor, the higher the reflectance of the bottom 124 of the cookware 110 and hence the lower its emissivity. The spectral transmissivity of the ceramic glass plate, which is traversed both by the radiation emitted by the LEDs and by the radiation reflected back by the bottom 124 of the pan/cookware 110, is taken into account in this measurement as well.

The intensity of the infrared radiation recorded by the sensor 104, 308 depends on the details of the construction because preferably no optical elements such as focusing lenses are used. The diameter and height of an enclosure 116, for example an aluminum enclosure, in the proximity of the LEDs 107, 307 and the sensor 104, 308 as well as the distance between the sensor 104, 308 and the ceramic glass plate of the hob 112 are well defined. The central illumination provided by the LEDs 107, 307 indicates the middle of the hob at which the temperature of the cookware 110 is measured. Preferably, in the absence of cookware, these LEDs blink when the hob is turned on. Once the presence of a pan 110 is detected, the LEDs are automatically turned off to prevent the temperature measurement to be influenced.

In order to evaluate the emissivity of the cookware 110, the infrared sensor 104, 308 first needs to be calibrated. This is required by the finite manufacturing tolerances of the receiver and the emitter diodes. For the purpose of calibration, a reference setup has been constructed which features identical geometrical dimensions and arrangement of every component of an actual stove. The sensor 104, 308 is calibrated by means of a black body radiator, the emitting surface of which is calibrated between 50°C and 350°C to a precision of 0.1°C. The sensor is calibrated for example precisely at a temperature of 150°C, this calibration providing the scale factor relating the sensor response to the incident radiation.

In the actual operation of a stove, as soon as the hob is turned on and a pan 110 is present, the infrared measurement system becomes active.

In a first step, the sensor value provided by the second amplifier stage 302 is recorded for a first rough temperature measurement.

In a second step, a reference value for the reflectance of the pan bottom 124 is set for the first amplifier stage 301.

In a third step, the infrared LEDs 114, 312 are then switched on and the actual reflectance as provided by the first amplifier stage 301 is recorded.

In a fourth step, the reference value is then subtracted from the measured reflectance by the microprocessor 304.

In a fifth step, the emissivity of the pan bottom, which is simply given by 1 - reflectance in percent, is thus calculated for a temperature range of typically 20 - 250°C.

This measurement cycle is continuously repeated during the whole period of time in which the stove is switched on. This permits accurate adjustment of the temperature measurement to any change of the emissivity of the cookware 110, for example when the latter is shifted in position on the hob.

As a result of heat conduction from the bottom 124 of the cookware 110 to the hob 112, the latter increasingly emits thermal radiation with increasing temperature. In order to compensate for this background radiation, the temperature of the ceramic glass plate of the hob 112 is measured with a temperature sensor 102, 306, such as a PT1000 thermistor, mounted underneath the plate.

The temperature of the bottom 124 of the pan is then evaluated by the microprocessor 304 which takes into account (1) the transmittance of the ceramic glass plate, (2) the thermal radiation emitted by the ceramic glass plate, evaluated by Planck's radiation law from its now known temperature, (3) the radiation emitted by the bottom of the pan and corrected for its emissivity, related with its temperature again through Planck's law.

In case the cookware 110 is not well placed above the infrared sensor 104 of the hob 112, the latter could in principle fail to measure the emitted radiation correctly, as a result of which the cookware might overheat. In order to prevent this from occurring, an alternative temperature measurement may be used with up to nine temperature sensors 102 located underneath the ceramic glass plate 112, depending on various needs of the embodiment. These temperature sensors 102 provide information about measured temperatures. This information is used for abnormal temperature protection of the induction coils 106 and indirectly of the cookware 110. Optionally, any of these temperature sensors records a temperature value above the one indicated by the infrared measurement system 130, the temperature control henceforth works with this higher value.

The invention permits the temperature of the bottom 124 of the cookware 110 to be monitored by the combination according to the appended claims also in the power control mode. This includes a safety provision, wherein the power is reduced when the bottom 124 gets too hot. This active protection against overheating functions even when the cookware 110 and the ceramic glass hob 112 are spatially separated, so that no direct thermal contact exists between the two.

A technical description of the measurement procedure includes the following steps. The system comprises ten machine states numbered from 0 to 9.

The cycle time of each of these ten machine states is 100 msec, amounting to a total measurement time of 1 sec (10 × 100 ms = 1 sec). Four auto-ranging steps of amplifier stages 301 and 302 are carried out at states 0 (0 ms), 2 (200 ms), 4 (400 ms) and 6 (600 ms) in order to determine the proper amplification factor for the relevant signal strength at each state. At state 1, 3, 5 and 8, i.e. after 100, 300, 500 and 800 ms, no action is taken. Additionally, at state 6 the reference value for the emission is recorded for the first amplifier stage 301. At state 7, the evaluation cycle of the emissivity is made wherein the infrared LEDs 114, 312 are switched on and a series of 50 measurements of the first amplifier stage 301 are taken within 5 msec. The highest value of this measurement series is used for the calculation of the difference with the previously set reference value. From this difference, the emissivity is determined.

At state 9 (900 ms), a sufficiently long waiting time after state 7 in order to rule out any influence of the infrared reflectivity measurement on the temperature measurement (due to low pass filter capacitances, a short pause must be taken after the process of detecting the emission value, during which higher signal levels must be expected, before infrared measurements can be performed again. The temperature of the bottom 124 of the cookware 110 is calculated from the emissivity, the temperature of the temperature sensors 102, the ceramic glass temperature transmitted for example by the RS485 115, 305, and from a scaled total value. The latter is given by a multiplication factor of the output value of the second amplifier stage 302, weighted by the total amplification of both amplifier stages. This output value is again obtained from the average of 200 measurements taken at 100 µsec intervals, adding up to a total of 20 msec (200 × 100 µsec = 20 msec).

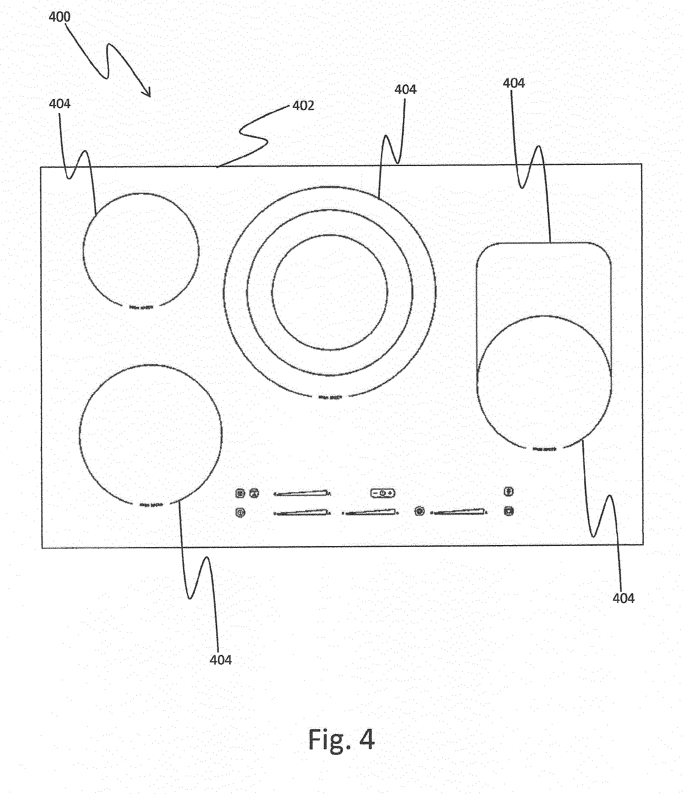

Referring now to **FIG. 4**, a multi-hob cooking kitchen island 400 includes a work surface 402 into which a plurality of cooking hobs 404 are integrated wherein at least one has the temperature measurement system integrated therein.

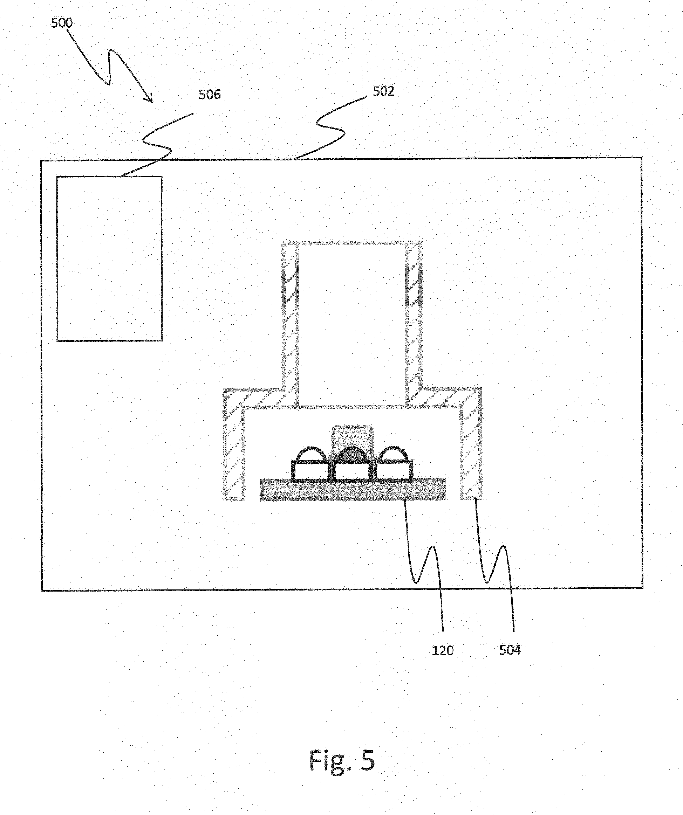

Referring now to **FIG. 5**, a retrofit kit 500 is provided in packaging 502. This kit 500 includes the printed circuit board 120 containing the sensors and control electronics of **FIG. 1B** mounted in a housing 504 adapted to be attached at a central location below the ceramic glass hob 112 of an induction coil cooking system that was manufactured without such a temperature sensor. The kit 500 includes instructions 506 for installation, including retrofit wiring instructions, enabling connection to the existing convention control knob. The kit 500 is pre-configured to fit on induction cooking systems by model number year of manufacture given that each conventional induction cooking system is different in some way, and may have a ceramic glass hob with different reflectivity and transmissivity or other characteristics. Where the original design of the ceramic glass hub includes a ceramic glass hub that is not compatible with the temperature sensor optionally, a replacement hob is provided in the kit.

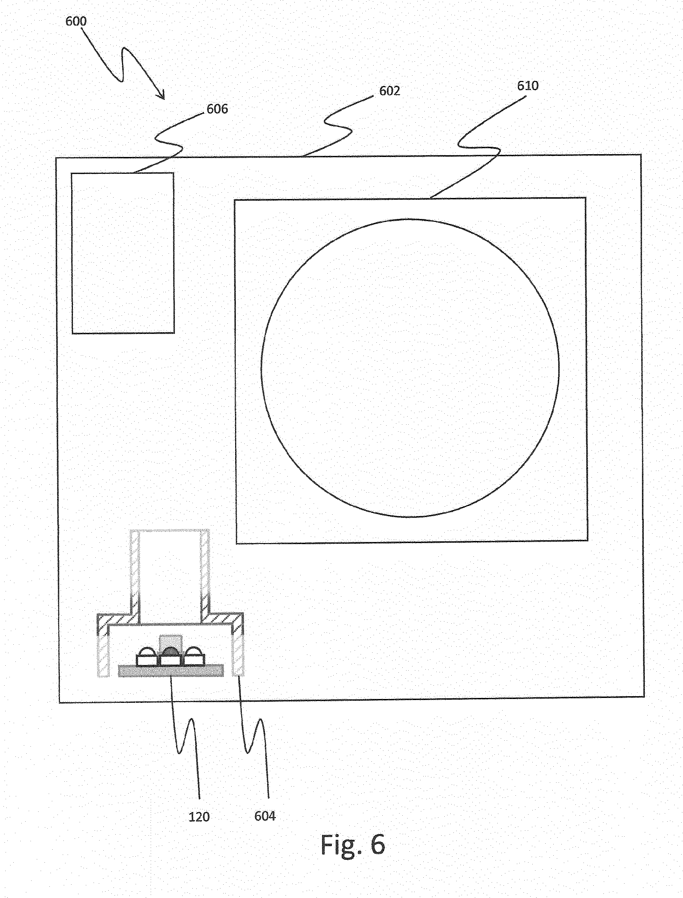

Referring now to **FIG. 6**, in another embodiment, a retrofit kit 600 is provided in packaging 602. This kit 600 is essentially identical to the kit 500 of **FIG. 4**, except that a replacement ceramic glass hob is provided as a retrofit module together with the printed circuit board containing the sensors and control electronics of **FIG. 1B** mounted in a housing 604. Instructions 606 are also provided in the packaging 602.

It should be appreciated that the particular implementations shown and herein described are representative of the invention and its best mode and are not intended to limit the scope of the present invention as set out in the appended claims.

## Claims

1. An infrared measurement system (100) and induction cooker combination wherein the induction cooker comprises an induction coil and at least one hob having at least one glass ceramic plate, the system (100) adapted for the remote measurement of the temperature of a cookware's (110) lower surface when placed on the hob, wherein the system (100) comprises a printed circuit board (120), wherein the printed circuit board (120) comprises at least one switched infrared light emitting diode (114, 312); at least one infrared sensor (104, 308) arranged to receive light from the at least one infrared light emitting diode (114, 312) reflected from the lower surface (124) of the cookware (110), the at least one infrared sensor (104, 308) being a photodiode, the system comprising a temperature sensor (102) located in between the inductor coil and the associated glass ceramic plate of the hob of the induction cooker, the system comprising a thermistor (105, 306) located in the immediate vicinity of the at least one infrared sensor (104, 308), the system being configured to determine the estimated emissivity of the lower surface (124) of the cookware (110) from its reflectance determined from the intensity of reflected switched light measured by the at least one infrared sensor (104, 308) and the intensity of light emitted by the at least one infrared light emitting diode (114, 312), whereby the temperature in the vicinity of the at least one infrared sensor (104, 308) measured by the thermistor (105, 306) is used together with the temperature characteristic of the photodiode to compensate the measured intensity of the reflected light; the photodiode being calibrated with respect to an emissivity measurement of a black body radiator between 50°C and 350°C so as to provide a scale factor applied to the above measured emissivity to provide the emissivity of the lower surface relative to that of a black body in the above temperature range; the system being adapted for measuring said temperature of the ceramic glass plate of the hob (112) with the temperature sensor (102) and measuring the combined thermal radiation emitted from the lower surface of the cookware and from the ceramic glass plate with the photodiode; the system being configured to determine the thermal radiation emitted from the lower surface using the measured combined thermal radiation, by accounting for the thermal radiation emission from the ceramic plate based on its temperature and to determine the temperature of the lower surface based on the determined thermal radiation emitted from this surface and its emissivity determined from the intensity of infrared light from the infrared emitting diode reflected from the lower surface which is detected at the photodiode and to which the scale factor is applied.

2. The combination of claim 1, wherein the system (100) is adapted to take into account the spectral transmissivity of the ceramic glass plate of the ceramic glass hob (112), as provided by the hob manufacturer, in the temperature measurement.

3. The combination of claims 1 or 2, wherein the system (100) is adapted to continuously evaluate the emissivity of the cookware (110).

4. The combination of claim 3, wherein the at least one infrared LED (114, 312) is located close to the infrared sensor (104, 308).

5. The combination of any one of claims 1 to 4, wherein the at least one infrared sensor is mounted underneath the ceramic glass plate of the hob together with at least one visible light emitting diode (107, 307) indicating the center of the hob for easier positioning of the cookware, and cookware located in close proximity to the infrared sensor.

6. The combination of claim 5, wherein the at least one infrared sensor (104, 308) is mounted in an enclosure (116), preferably made from aluminum, which protects the infrared measurement system (130) from thermal and electromagnetic interference.

7. The combination of claim 5, wherein the sensor (104, 308) is highly sensitive at a wavelength of 2.3 µm.

8. The combination of claim 5, wherein the printed circuit board further comprising
a. the control electronics (121), and
b. a RS485 interface (115, 305).

9. The combination of any one of claims 1 to 8, wherein the at least one infrared sensor (104, 308) is mounted so as to be isolated from infrared light sources other than that of the object whose temperature is to be measured, particularly sources which vary in intensity over time.

10. The combination of any one of claims 1 to 9, wherein clockwise or counterclockwise rotation of a rotary knob (200) from an off position (206) changes the mode of operation and the power level from power control to temperature control.

11. The combination of any one of claims 1 to 10, wherein temperature can be continuously set in this mode, optionally in the range from 70°C to 250°C.

12. The combination of any one of claims 1 to 11 comprised in one of a multi-hob cooking kitchen island (400), or a table top.

13. A method for determining the temperature of cookware (110) having a lower surface (124) on an induction cooker, using the combination of an infrared measurement system and an induction cooker according to any one of claims 1-12.

## Patentansprüche

1. Infrarotmesssystem (100) und Induktionskochfeldkombination, wobei das Induktionskochfeld eine Induktionsspule und mindestens ein Kochfeld, das mindestens eine Glaskeramikplatte aufweist, umfasst, wobei das System (100) für die Fernmessung der Temperatur einer unteren Oberfläche eines Kochgeschirrs (110), wenn dieses auf dem Kochfeld platziert ist, angepasst ist, wobei das System (100) umfasst: eine Leiterplatte (120), wobei die Leiterplatte (120) mindestens eine infrarotlichtemittierende Schaltdiode (114, 312) umfasst; mindestens einen Infrarotsensor (104, 308), der angeordnet ist, um Licht von der mindestens einen infrarotlichtemittierenden Diode (114, 312) zu empfangen, das von der unteren Oberfläche (124) des Kochgeschirrs (110) reflektiert wird, wobei der mindestens eine Infrarotsensor (104, 308) eine Fotodiode ist, das System umfassend einen Temperatursensor (102), der sich zwischen der Induktorspule und der zugehörigen Glaskeramikplatte des Kochfelds des Induktionskochfelds befindet, das System umfassend einen Thermistor (105, 306), der sich in unmittelbarer Nähe des mindestens einen Infrarotsensors (104, 308) befindet, wobei das System konfiguriert ist, um den geschätzten Emissionsgrad der unteren Oberfläche (124) des Kochgeschirrs (110) von seinem Reflexionsgrad, der von der Intensität von reflektiertem geschaltetem Licht bestimmt wird, gemessen durch den mindestens einen Infrarotsensor (104, 308), und der Intensität von emittiertem Licht durch die mindestens eine infrarotlichtemittierend Diode (114, 312), zu bestimmen, wobei die Temperatur in der Nähe des mindestens einen Infrarotsensors (104, 308), gemessen durch den Thermistor (105, 306) zusammen mit der Temperaturcharakteristik der Fotodiode verwendet wird, um die gemessene Intensität des reflektierten Lichts zu kompensieren; wobei die Fotodiode in Bezug auf eine Emissionsmessung eines schwarzen Strahlers zwischen 50 °C und 350 °C kalibriert wird, um einen Skalenfaktor bereitzustellen, der auf den oben gemessene Emissionsgrad angewendet wird, um den Emissionsgrad der unteren Oberfläche relativ zu dem eines schwarzen Körpers in dem oben erwähnten Temperaturbereich bereitzustellen; wobei das System angepasst ist, zum Messen der Temperatur der keramischen Glasplatte des Kochfelds (112) mit dem Temperatursensor (102) und zum Messen der kombinierten Wärmestrahlung, die von der unteren Oberfläche des Kochgeschirrs und von der keramischen Glasplatte mit der Fotodiode emittiert wird; wobei das System konfiguriert ist, um die Wärmestrahlung, die von der unteren Oberfläche emittiert wird, unter Verwendung der gemessenen kombinierten Wärmestrahlung zu bestimmen, durch Berücksichtigen der Wärmestrahlungsemission von der Keramikplatte basierend auf ihrer Temperatur, und der Temperatur der unteren Oberfläche basierend auf der bestimmten Wärmestrahlung, die von dieser Oberfläche emittiert wird, und deren Emissionsgrad, der aus der Intensität von Infrarotlicht von der infrarotlichtemittierend Diode bestimmt wird, das von der unteren Oberfläche reflektiert wird, das von der Fotodiode erfasst wird und an das der Skalenfaktor angelegt wird.

2. Kombination nach Anspruch 1, wobei das System (100) angepasst ist, die spektrale Durchlässigkeit der keramischen Glasplatte des Keramikglaskochfelds (112), wie durch den Kochfeldhersteller bereitgestellt, in der Temperaturmessung zu berücksichtigen.

3. Kombination nach Anspruch 1 oder 2, wobei das System (100) angepasst ist, um den Emissionsgrad des Kochgeschirrs (110) kontinuierlich zu bewerten.

4. Kombination nach Anspruch 3, wobei die mindestens eine Infrarot-LED (114, 312) sich nahe dem Infrarotsensor (104, 308) befindet.

5. Kombination nach einem der Ansprüche 1 bis 4, wobei der mindestens eine Infrarotsensor unter der keramischen Glasplatte des Kochfelds zusammen mit mindestens einer sichtbaren lichtemittierenden Diode (107, 307) montiert ist, die die Mitte des Kochfelds zum leichteren Positionieren des Kochgeschirrs angibt, und Kochgeschirr, das sich in unmittelbarer Umgebung des Infrarotsensors befindet.

6. Kombination nach Anspruch 5, wobei der mindestens eine Infrarotsensor (104, 308) in einer Umfassung (116) montiert ist, vorzugsweise hergestellt aus Aluminium, das das Infrarotmesssystem (130) vor Wärme- und elektromagnetischer Interferenz schützt.

7. Kombination nach Anspruch 5, wobei der Sensor (104, 308) bei einer Wellenlänge von 2,3 µm hochempfindlich ist.

8. Kombination nach Anspruch 5, die Leiterplatte ferner umfassend
a. die Steuerelektronik (121), und
b. eine RS485-Schnittstelle (115, 305).

9. Kombination nach einem der Ansprüche 1 bis 8, wobei der mindestens eine Infrarotsensor (104, 308) so montiert ist, dass er von anderen Infrarotlichtquellen als der des Objekts isoliert wird, deren Temperatur gemessen werden soll, insbesondere Quellen, die über die Zeit in der Intensität variieren.

10. Die Kombination nach einem der Ansprüche 1 bis 9, wobei die Drehung eines Drehknopfes (200) im Uhrzeigersinn oder gegen den Uhrzeigersinn von einer Aus-Position (206) den Betriebsmodus und die Leistungsstufe von einer Leistungssteuerung auf eine Temperatursteuerung ändert.

11. Kombination nach einem der Ansprüche 1 bis 10, wobei die Temperatur in diesem Modus kontinuierlich eingestellt werden kann, optional in dem Bereich von 70 °C bis 250 °C.

12. Kombination nach einem der Ansprüche 1 bis 11, die in einem von einer Multi-Kochfeldinsel (400) oder einem Tischplatteneinsatz enthalten ist.

13. Verfahren zum Bestimmen der Temperatur des Kochgeschirrs (110), das eine untere Oberfläche (124) aufweist, auf einem Induktionskochfeld unter Verwendung der Kombination eines Infrarotmesssystems und eines Induktionskochfelds nach einem der Ansprüche 1 bis 12.

## Revendications

1. Système de mesure infrarouge (100) et combinaison de cuiseur à induction, dans lequel le cuiseur à induction comprend une bobine d'induction et au moins une plaque de cuisson ayant au moins une plaque en vitrocéramique, le système (100) étant conçu pour la mesure à distance de la température d'une surface inférieure de la batterie de cuisine (110) lorsqu'elle est placée sur la plaque de cuisson, dans lequel le système (100) comprend une carte de circuit imprimé (120), dans lequel la carte de circuit imprimé (120) comprend au moins une diode électroluminescente infrarouge commutée (114, 312) ; au moins un capteur infrarouge (104, 308) agencé pour recevoir de la lumière provenant de l'au moins une diode électroluminescente infrarouge (114, 312) réfléchie par la surface inférieure (124) de la batterie de cuisine (110), l'au moins un capteur infrarouge (104, 308) étant une photodiode, le système comprenant un capteur de température (102) situé entre la bobine d'inducteur et la plaque en vitrocéramique associée de la plaque du cuiseur à induction, le système comprenant une thermistance (105, 306) située à proximité immédiate de l'au moins un capteur infrarouge (104, 308), le système étant configuré pour déterminer l'émissivité estimée de la surface inférieure (124) de la batterie de cuisine (110) à partir de sa réflectance déterminée à partir de l'intensité de la lumière commutée réfléchie mesurée par l'au moins un capteur infrarouge (104, 308) et de l'intensité de la lumière émise par l'au moins une diode électroluminescente infrarouge (114, 312) moyennant quoi la température à proximité de l'au moins un capteur infrarouge (104, 308) mesurée par la thermistance (105, 306) est utilisée conjointement avec la caractéristique de température de la photodiode pour compenser l'intensité mesurée de la lumière réfléchie ; la photodiode étant calibrée par rapport à une mesure d'émissivité d'un radiateur de corps noir entre 50 °C et 350 °C de manière à fournir un facteur d'échelle appliqué à l'émissivité mesurée ci-dessus pour fournir l'émissivité de la surface inférieure par rapport à celle d'un corps noir dans la plage de températures ci-dessus ; le système étant conçu pour mesurer ladite température de la plaque en vitrocéramique de la plaque de cuisson (112) avec le capteur de température (102) et mesurer le rayonnement thermique combiné émis par la surface inférieure de la batterie de cuisine et provenant de la plaque en vitrocéramique avec la photodiode ; le système étant configuré pour déterminer le rayonnement thermique émis par la surface inférieure à l'aide du rayonnement thermique combiné mesuré, en tenant compte de l'émission de rayonnement thermique de la plaque céramique sur la base de sa température et pour déterminer la température de la surface inférieure sur la base du rayonnement thermique déterminé émis par cette surface et de son émissivité déterminée à partir de l'intensité de la lumière infrarouge provenant de la diode électroluminescente réfléchie par la surface inférieure qui est détectée au niveau de la photodiode et à laquelle le facteur d'échelle est appliqué.

2. Combinaison selon la revendication 1, dans laquelle le système (100) est conçu pour prendre en compte la transmissivité spectrale de la plaque en vitrocéramique de la plaque de cuisson en vitrocéramique (112), telle que fournie par le fabricant de plaques de cuisson, dans la mesure de température.

3. Combinaison selon les revendications 1 ou 2, dans laquelle le système (100) est conçu pour évaluer en continu l'émissivité de la batterie de cuisine (110).

4. Combinaison selon la revendication 3, dans laquelle l'au moins une DEL infrarouge (114, 312) est située près du capteur infrarouge (104, 308).

5. Combinaison selon l'une quelconque des revendications 1 à 4, dans laquelle l'au moins un capteur infrarouge est monté sous la plaque en vitrocéramique de la plaque de cuisson conjointement avec au moins une diode électroluminescente visible (107, 307) indiquant le centre de la plaque de cuisson pour un positionnement plus facile de la batterie de cuisine, et de la batterie de cuisine située à proximité immédiate du capteur infrarouge.

6. Combinaison selon la revendication 5, dans laquelle le au moins un capteur infrarouge (104, 308) est monté dans une enceinte (116), de préférence en aluminium, qui protège le système de mesure infrarouge (130) de perturbations thermiques et électromagnétiques.

7. Combinaison selon la revendication 5, dans laquelle le capteur (104, 308) est hautement sensible à une longueur d'onde de 2,3 µm.

8. Combinaison selon la revendication 5, dans laquelle la carte de circuit imprimé comprend en outre
a. l'électronique de commande (121), et
b. une interface RS485 (115, 305).

9. Combinaison selon l'une quelconque des revendications 1 à 8, dans laquelle l'au moins un capteur infrarouge (104, 308) est monté de manière à être isolé de sources de lumière infrarouge autres que celle de l'objet dont la température doit être mesurée, en particulier des sources qui variant en intensité au fil du temps.

10. Combinaison selon l'une quelconque des revendications 1 à 9, dans laquelle la rotation horaire ou antihoraire d'un bouton rotatif (200) depuis une position d'arrêt (206) change le mode de fonctionnement et le niveau de puissance à partir de la commande de puissance à la commande de température.

11. Combinaison selon l'une quelconque des revendications 1 à 10, dans laquelle la température peut être réglée en continu dans ce mode, éventuellement dans la plage de 70 °C à 250 °C.

12. Combinaison selon l'une quelconque des revendications 1 à 11, comprise dans l'un d'un îlot de cuisine de cuisson multiplaque (400), ou d'une table de cuisson.

13. Procédé de détermination de la température de batterie de cuisine (110) ayant une surface inférieure (124) sur un cuiseur à indiction, à l'aide de la combinaison d'un système de mesure infrarouge et d'un cuiseur à induction selon l'une quelconque des revendications 1 à 12.
